# EUROPEAN PATENT APPLICATION

(11) **EP 3 168 833 A1**
(43) Date of publication of application: **17.05.2017**
(21) Application number: 16198725.0
(22) Date of filing: 14.11.2016
(51) Int. Cl.: G09G 3/3225, G06K 9/00, H01L 27/32, G06F 3/041

(54) **OLED DISPLAY PANEL, TERMINAL AND METHOD FOR CONTROLLING IDENTIFICATION**

(30) Priority: 13.11.2015 CN 201510781251
(71) Applicant: Xiaomi Inc., Beijing 100085 (CN)
(72) Inventor: LI, Guosheng, Beijing, Beijing 100085 (CN); YANG, Xiaoxing, Beijing, Beijing 100085 (CN); LIU, Shanrong, Beijing, Beijing 100085 (CN)
(74) Representative: Sackin, Robert

(57) **Abstract**

The present disclosure provides an OLED display panel, a terminal and a method for controlling identification, and belongs to the field of display technology. The OLED display panel includes: an array substrate (110); an OLED layer (120) disposed on the array substrate (110); a fingerprint collecting unit array (330A) disposed in the array substrate (110), or a fingerprint collecting unit array (330A) disposed between the array substrate (110) and the OLED layer (120); and a control circuit connected to the fingerprint collecting unit array (330A).

## Description

### TECHNICAL FIELD

The present disclosure relates to the field of display technology, and more particularly to an organic light emitting diode (OLED) display panel, a terminal and a method for controlling identification.

### BACKGROUND

A fingerprint identifying module is a common component in a mobile terminal. The fingerprint identifying module is used for collecting a fingerprint image.

In the related art, the fingerprint identifying module is generally disposed in a physical button of the mobile terminal. For example, the fingerprint identifying module is disposed in the physical button which is known as a home button and located at a front surface of the mobile terminal. For another example, the fingerprint identifying module is disposed in the physical button which is used for turning the mobile terminal on and off and located at a side surface of the mobile terminal.

### SUMMARY

In order to dispose a fingerprint identifying module inside a mobile terminal in a non-separated way, the present disclosure provides in embodiments an organic light emitting diode (OLED) display panel, a terminal and a method for controlling identification. The technical solutions are shown as below.

Aspects of the present invention are defined in the independent claims below to which reference should now be made. Preferred features are set-out in the dependent claims.

According to a first aspect of embodiments of the present disclosure, there is provided an organic light emitting display (OLED) panel, including:
an array substrate;
an OLED layer disposed on the array substrate;
a fingerprint collecting unit array disposed in the array substrate, or a fingerprint collecting unit array disposed between the array substrate and the OLED layer; and
a control circuit connected to the fingerprint collecting unit array.

Alternatively, the array substrate includes *m*×*n* pixel units, each pixel unit includes K pixel sub-units; and
the fingerprint collecting unit array includes *a*×*b* fingerprint collecting units, each fingerprint collecting unit corresponds to one pixel sub-unit in an one-to-one manner,
wherein *a*≤*K*×*m* and *b≤n.*

Alternatively, the fingerprint collecting units in the fingerprint collecting unit array correspond to the pixel sub-units in the array substrate in the one-to-one manner, wherein *a*=*K*×*m* and *b*=*n*; or
the fingerprint collecting unit array is disposed on a partial region of the array substrate, the fingerprint collecting units in the fingerprint collecting unit array correspond to the pixel sub-units of the partial region in the one-to-one manner, wherein *a<K*×*m* and *b<n*; or *a<K*×*m* and *b*=*n;* or *a*=*K*×*m* and *b<n.*

Alternatively, the fingerprint collecting unit array is disposed in the array substrate;
the pixel sub-unit includes a thin film transistor (TFT) region and a non-TFT region; and
a position in which at least one fingerprint collecting unit is present is located at the non-TFT region of a corresponding pixel sub-unit.

Alternatively, the fingerprint collecting unit array is disposed between the array substrate and the OLED layer; and
a position in which the fingerprint collecting unit is present is located above a region of a corresponding sub-pixel unit.

Alternatively, the control circuit includes a plurality of data lines in *a* columns and a plurality of control lines in *b* rows;
each row of the plurality of control lines is connected to the plurality of data lines in *a* columns via switches 45 in the number of *a*, respectively; and
a control terminal of each switch is connected to a corresponding control line, a first connecting terminal of each switch is connected to a corresponding fingerprint collecting unit, and a second connecting terminal of each switch is connected to a corresponding data line.

According to a second aspect of embodiments of the present disclosure, there is provided a terminal, including the organic light emitting display (OLED) panel according to the first aspect of embodiments of the present disclosure.

Alternatively, the terminal further includes a fingerprint collecting control unit connected to each data line and each control line.

According to a third aspect of embodiments of the present disclosure, there is provided a method for controlling identification, for use in a fingerprint collecting control unit connected to the organic light emitting display (OLED) panel according to the first aspect of embodiments of the present disclosure. The method includes:
sending an enabling signal to a control line in the *i*^{th} row, for controlling a fingerprint collecting unit in the *i*^{th} row to communicate with a data line;
obtaining a fingerprint signal collected by the fingerprint collecting units in the *i*^{th} row via the data line;
setting *i*=*i*+1 and resending the enabling signal to the control line in the *i*+1^{th} row in the case that *i* is less than *b*;
setting *i*=1 and resending the enabling signal to the control line in the *i*^{th} row in the case that *i* equals to *b.*

Alternatively, sending the enabling signal to the control line in the *i*^{th} row includes:
sending the enabling signal to the control line in the *i*^{th} row at a predetermined time interval,
wherein the predetermined time interval includes:
a time interval between a first time point when the OLED panel refreshes to display a displaying content of the *i*^{th} frame and a second time point when the OLED panel refreshes to display a displaying content of the *i*+1^{th} frame, *i* being a positive integer; or
a time interval between a third time point when the OLED panel refreshes to display a displaying content of the *i*^{th} row and a fourth time point when the OLED panel refreshes to display a displaying content of the *i*+1^{th} row, *i* being a positive integer; or
a time interval between a fifth time point when the OLED panel refreshes to display a displaying content of the *i*^{th} group and a sixth time point when the OLED panel refreshes to display a displaying content of the *i*+1^{th} group, each group of the displaying content including successive *L* rows of the displaying content, *i* being a positive integer, *L* being the total number of rows predetermined.

According to embodiments of the present disclosure, the fingerprint identifying module array is disposed in the array substrate of the OLED panel or between the array substrate and the OLED layer, so as to dispose the fingerprint identifying module in the mobile terminal in a non-separated way, so that a fingerprint identify function is integrated into the OLED panel, such that the terminal may display an image and identify an fingerprint at the same time even if merely provided with the OLED panel, thereby enhancing improving integral consistency and aesthetics of the terminal.

It is to be understood that both the foregoing general description and the following detailed description are illustrated only and are not restrictive of the disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram showing an OLED panel in the related art;
Fig. 2 is a schematic diagram showing an arrangement of pixel units of an array substrate;
Fig. 3A is a schematic diagram showing an OLED panel according to an illustrative embodiment of the present disclosure;
Fig. 3B is a schematic diagram showing an OLED panel according to another illustrative embodiment of the present disclosure;
Fig. 4A is a schematic diagram showing a position at which a fingerprint collecting unit is located according to an illustrative embodiment of the present disclosure;
Fig. 4B is a schematic diagram showing a position at which a fingerprint collecting unit is located according to an illustrative embodiment of the present disclosure;
Fig. 4C is a schematic diagram showing a position at which a fingerprint collecting unit is located according to an illustrative embodiment of the present disclosure;
Fig. 4D is a schematic diagram showing a position at which a fingerprint collecting unit is located according to another illustrative embodiment of the present disclosure;
Fig. 5 is a schematic diagram showing a control circuit according to an illustrative embodiment of the present disclosure;
Fig. 6 is a block diagram showing a terminal according to an illustrative embodiment of the present disclosure;
Fig. 7 is a flow chart showing a method for controlling identification according to an illustrative embodiment of the present disclosure; and
Fig. 8 is a flow chart showing a method for controlling identification according to an illustrative embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the invention. Instead, they are merely examples of apparatuses and methods consistent with aspects related to the invention as recited in the appended claims.

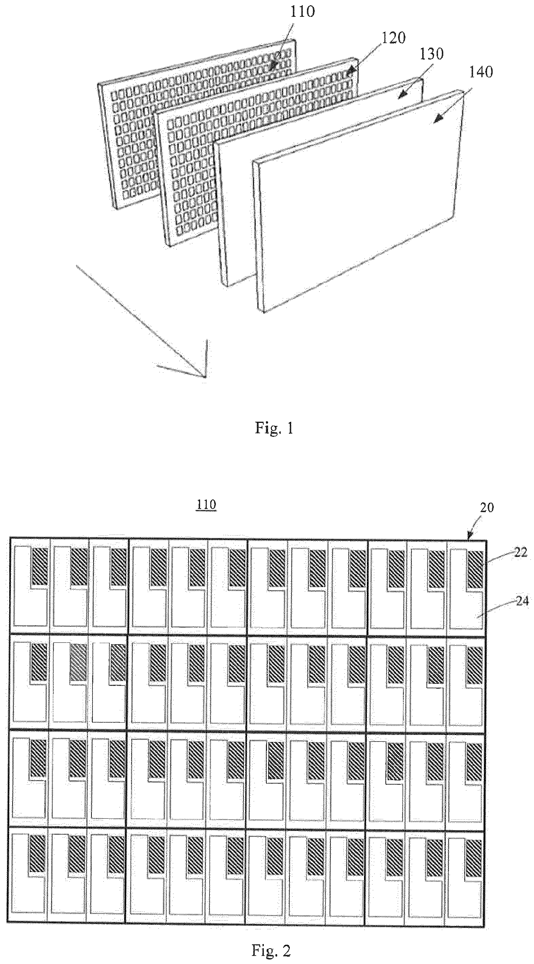

Before introducing and describing embodiments of the present disclosure, an organic light emitting diode (OLED) display panel is described briefly at first. Fig. 1 is a schematic diagram showing an OLED panel in the related art.

As shown in Fig. 1, the OLED panel includes: an array substrate 110, an OLED layer 120, a glass substrate 130 and a polarizer 140.

The OLED layer 120 is disposed on the array substrate 110, the glass substrate 130 is disposed on the OLED layer and the polarizer 140 is disposed on the glass substrate 130.

The OLED layer 120 includes *m*×*n* pixel units. Each pixel unit includes *K* pixel sub-units. In general, each pixel unit in the OLED layer 120 includes three pixel sub-units, which are a red (R) pixel sub-unit, a green (G) pixel sub-unit and a blue (B) pixel sub-unit. In some embodiments, each pixel unit includes four pixel sub-units, which are a red (R) pixel sub-unit, a green (G) pixel sub-unit, a blue (B) pixel sub-unit and a white (W) pixel sub-unit. That is the number of K may be three or four.

Correspondingly, the array substrate 110 may also include *m*×*n* pixel units, corresponding to the *m*×*n* pixel units in the OLED layer 120. Each pixel units in the array substrate 110 includes K pixel sub-units, such as three or four.

Fig. 2 is a schematic diagram showing an arrangement of pixel units in the array substrate 110. As shown in Fig. 2, the array substrate 110 includes 4×4 the pixel units, i.e., 16 pixel units, and each pixel unit includes three pixel sub-units 20. Each pixel sub-unit includes a thin film transistor (TFT) region 22 and a non-TFT region 24.

It should be noted that, Fig. 2 merely shows a partial region of the array substrate 110, i.e., the array substrate 110 may consist of a plurality of regions as shown in Fig. 2. The arrangement as shown in Fig. 2 is merely illustrative and explanatory, and other arrangements are not defined in embodiments of the present disclosure.

The polarizer 140 is attached on the glass substrate 130.

The array substrate 110 provides the OLED layer 120 electric field, under which an organic semiconductor material and a light emitting material are driven to emit light, such that the light emitted passes through the glass substrate 130 and the polarizer 140 successively from bottom to top, thereby displaying an image.

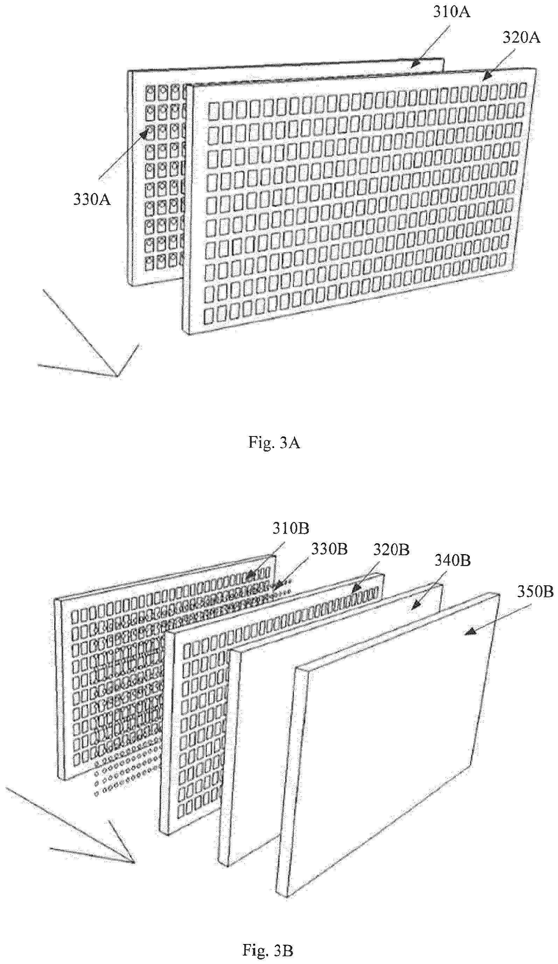

Fig. 3A is a schematic diagram showing an OLED panel according to an illustrative embodiment of the present disclosure. The OLED panel may be used for an electric device such as a mobile phone, a tablet computer and a laptop computer. As shown in Fig. 3A, the OLED panel includes:
an array substrate 310A;
an OLED layer 320A disposed on the array substrate 310A;
a fingerprint collecting unit array 330A disposed in the array substrate 310A; and
a control circuit (not shown) connected to the fingerprint collecting unit array 330A.

Alternatively, the glass substrate and the polarizer (not shown) may be disposed on the OLED layer 320A successively, as shown in Fig. 1.

Above all, with the OLED panel according to embodiments of the present disclosure, the fingerprint collecting unit array 330A is disposed in the array substrate 310A of the OLED panel, so as to dispose the fingerprint identifying module inside the terminal in a non-separated way, so that a fingerprint identifying function is integrated into the OLED panel, such that the terminal may have a displaying function and the fingerprint identifying function at the same time even if merely provided with the OLED panel, thereby enhancing integral consistency and aesthetics of the terminal.

Fig. 3B is a schematic diagram showing an OLED panel according to another illustrative embodiment of the present disclosure. The OLED panel may be used for an electric device such as a mobile phone, a tablet computer and a laptop computer. As shown in Fig. 3B, the OLED panel includes:
an array substrate 310B;
an OLED layer 320B disposed on the array substrate 310B;
a fingerprint collecting unit array 330B disposed between the array substrate 310B and the OLED layer 320B; and
a control circuit (not shown) connected to the fingerprint collecting unit array 330B.

Alternatively, a glass substrate 340B and a polarizer 350B may be disposed on the OLED layer 320B successively.

Above all, with the OLED panel according to embodiments of the present disclosure, the fingerprint collecting unit array 330B is disposed between the array substrate 310B and the OLED layer 320B, so as to dispose the fingerprint identifying module inside the terminal in a non-separated way, so that the fingerprint identifying function is integrated into the OLED panel, such that a panel of the terminal may have the displaying function and the fingerprint identifying function at the same time even if merely provided with the OLED panel, thereby enhancing integral consistency and aesthetics of the terminal.

In an alternative embodiment provided by the embodiment as shown in Fig. 3A, the fingerprint collecting unit array 330A includes *a*×*b* fingerprint collecting units. Each fingerprint collecting unit corresponds to one pixel sub-unit in the array substrate 310A, in which *a≤K*×*m* and *b≤n.* In a front view of the OLED panel, each fingerprint collecting unit is of a cross-section area less than an area occupied by one pixel sub-unit. During collecting the fingerprint, each fingerprint collecting unit is used to collect a fingerprint image for one pixel sub-unit.

The number of fingerprint collecting units may be the following two cases.
1. The number of the fingerprint collecting units equals to the number of the pixel sub-units in the array substrate, i.e., *a*=*K*×*m* and *b=n.*
2. The number of the fingerprint collecting units is less than the number of the pixel sub-units in the array substrate, i.e., *a<K*×*m* and *b<n;* or *a<K*×*m* and *b=n;* or *a*=*K*×*m* and *b<n.*

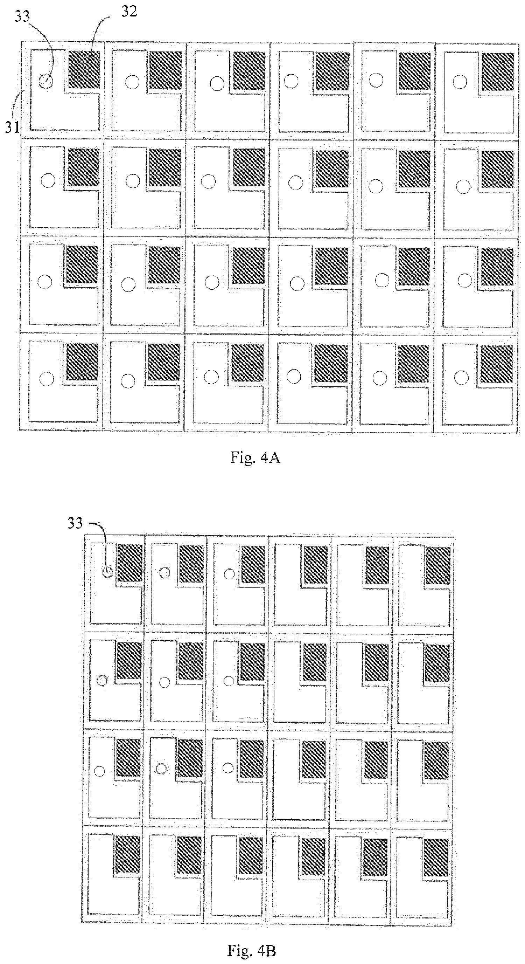

In accordance with different numbers of the fingerprint collecting units, the illustratively shown position where the fingerprint collecting unit is located may be the following two cases.
1. The fingerprint collecting units in the fingerprint collecting unit array correspond to the pixel sub-units in the array substrate in an one-to-one manner, in which *a*=*K*×*m* and *b=n,* i.e., each pixel sub-unit corresponds to one fingerprint collecting unit.
   Alternatively, a position in which at least one fingerprint collecting unit is present is located at the non-TFT region in a corresponding pixel sub-unit.
   In general, in view of sizes of the fingerprint collecting unit and a circuit connected thereto, the position in which the fingerprint collecting unit is present is located at the non-TFT region in the corresponding pixel sub-unit, while in some embodiments, the position in which the fingerprint collecting unit is present is located at the TFT region in the corresponding pixel sub-unit.
   Taking the fingerprint collecting unit array disposed in the array substrate as an example, as shown in Fig. 4A, the array substrate includes 2×4 pixel units 31, i.e., including 24 (8×3) pixel sub-units. The array substrate further includes 6×4 fingerprint collecting units 33, i.e., including 24 fingerprint collecting units 33. The non-TFT region of each pixel sub-unit 31 is provided with one corresponding fingerprint collecting unit 33.
2. The fingerprint collecting unit array is disposed at a partial region of the array substrate, the fingerprint collecting units in the fingerprint collecting unit array correspond to the pixel sub-units in the partial region in an one-to-one manner, in which a< *K*×*m* and *b<n;* or *a<K*×*m* and *b=n;* or *a*=*K*×*m* and *b<n,* i.e., each pixel sub-unit in the partial region of the array substrate corresponds to one fingerprint collecting unit.
   Alternatively, a position in which at least one fingerprint collecting unit is present is located at the non-TFT region in the corresponding pixel sub-unit.
   Taking the fingerprint collecting unit array disposed in the array substrate as an example, as shown in Fig. 4B, the array substrate includes 2×4 pixel units, i.e., including 24 (8x3) pixel sub-units. The array substrate further includes 9 (3×3) fingerprint collecting units. For 9 of the pixel sub-units located at the partial region, each pixel sub-unit is provided with one corresponding fingerprint collecting unit 33.
3. The entire region of the array substrate is provided with the fingerprint collecting units corresponding to some pixel sub-units in the array substrate, which are arranged separately, in which *a*<*K*×*m* and *b<n;* or *a<K*×*m, b=n;* or *a*=*K*×*m* and *b<n.*

Alternatively, a position in which at least one fingerprint collecting unit is present is located at the non-TFT region in the corresponding pixel sub-unit.

The fingerprint collecting units correspond to some pixel sub-units in the array substrate, i.e., the fingerprint collecting units are distributed in the entire region of the array substrate evenly. However, some pixel sub-units are provided with one fingerprint collecting unit, while other sub-pixel units are not provided with the fingerprint collecting unit.

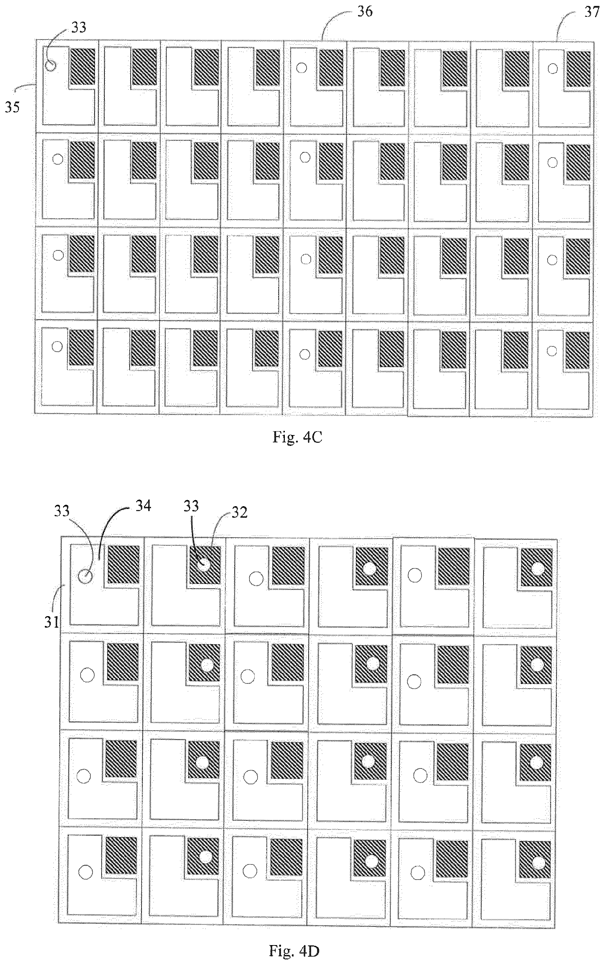

Taking the fingerprint collecting unit array disposed in the array substrate as an example, as shown in Fig. 4C, the array substrate includes 12 (3×4) pixel units 31, i.e., including 36 (12x3) pixel sub-units. The array substrate further includes 3×4 fingerprint collecting units 33, i.e., 12 fingerprint collecting units 33. Taking the first row of the array substrate as an example, the first pixel sub-unit 35 in the first pixel unit from left to right side is provided with one fingerprint collecting unit 33, the second pixel sub-unit 36 in the second pixel unit is provided with one fingerprint collecting unit 33, and the third pixel sub-unit 37 in the third pixel unit is provided with one fingerprint collecting unit 33.

Alternatively, the fingerprint collecting unit array may further be disposed between the array substrate and the OLED layer: the position in which the fingerprint collecting unit is present is located above the corresponding pixel sub-unit.

In the case that the fingerprint collecting unit array is disposed between the array substrate and the OLED layer, the position in which the fingerprint collecting unit is present is located above the corresponding pixel sub-unit, i.e., the position in which the fingerprint collecting unit is present is located above the TFT region in the corresponding pixel sub-unit, or above the non-TFT region in the corresponding pixel sub-unit.

Taking the fingerprint collecting unit array disposed between the array substrate and the OLED layer as an example, as shown in Fig. 4D, some fingerprint collecting units 33 are located above the TFT region 32 in the corresponding pixel sub-unit, and other fingerprint collecting units 33 are located above the non-TFT region 34 in the corresponding pixel sub-unit.

It should be noted that Figs. 4A-4D are merely some examples showing some positions in which the fingerprint collecting unit may be located, it is apparent for those skilled in the art to acquire other positions in which the fingerprint collecting unit is located based on combinations of the above described cases, and other possible arrangements of positions are not limited herein by embodiments of the present disclosure.

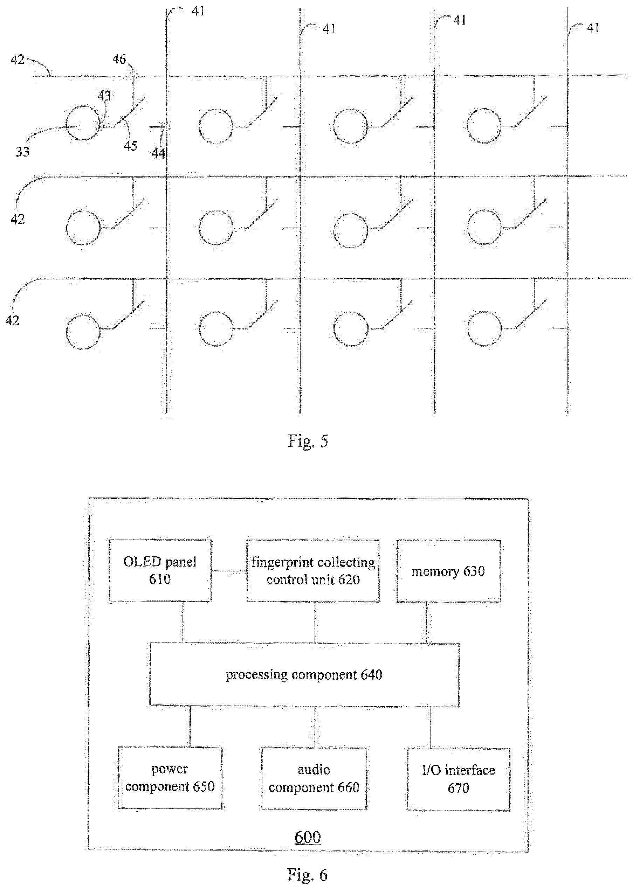

Fig. 5 is a schematic diagram showing a control circuit connected to a fingerprint collecting unit array. The control circuit includes: a plurality of data lines 41 in *a* columns and a plurality of control lines 42 in *b* rows.

Each row of the plurality of the control lines 42 is connected to the plurality of the data lines 41 in *a* columns via switches 45 in the number of *a*, respectively. Each switch 45 includes: a control terminal 46 connected to the control line 42; a first connecting terminal 43 connected to the corresponding fingerprint collecting unit 33; and a second connecting terminal 44 connected to the corresponding data line 41.

As shown in Fig. 5, it is assumed that the control circuit includes three rows of the control lines 42, four columns of the data lines 41, 3×4 fingerprint collecting units, i.e., 12 fingerprint collecting units. Data in Fig. 5 is merely for illustration, the specific number of *a* or *b* is not limited herein.

It is known to those skilled in the art, the array substrate may also include: *K*×*m* columns of the pixel data lines and *n* rows of the pixel control lines. The pixel data line and the pixel control line are connected to the pixel sub-unit via a TFT device. A control circuit consisting of the pixel data line and the pixel control line for connecting the TFT in the array substrate is similar to that shown in Fig. 4, which is not elaborated in detail herein.

Fig. 6 is a block diagram showing a terminal according to an illustrative embodiment of the present disclosure. As shown in Fig. 6, the terminal 600 includes an OLED panel 610, a fingerprint collecting control unit 620, a memory 630, a processing component 640, a power component 650, an audio component 660, an input/output (I/O) interface 670.

The OLED panel 610 may be any one of the OLED panels as shown in Figs. 3A and 3B provided by the above embodiments.

The fingerprint collecting control unit 620 is connected to a control circuit in the OLED panel 610. The fingerprint collecting control unit 620 is connected to each data line in the control circuit, and further connected to each control line in the control circuit. The control circuit is connected to the fingerprint collecting unit array in the OLED panel 610.

The memory 630 is configured to store various types of data for supporting operations to the device 600. Examples of such data include instructions for any applications or methods operated on the device 600, contact data, phonebook data, messages, pictures, video, etc. The memory 630 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The processing component 640 typically controls overall operations of the device 600, such as the operations associated with display, telephone calls, data communications, camera operations, and recording operations. The processing component 640 may include one or more processors to execute instructions to perform all or part of the steps in the above described methods. Moreover, the processing component 640 may include one or more modules which facilitate the interaction between the processing component 640 and other components.

The power component 650 provides power to various components of the device 600. The power component 650 may include a power management system, one or more power sources, and any other components associated with the generation, management, and distribution of power in the device 600.

The audio component 660 is configured to output and/or input audio signals. For example, the audio component 660 includes a microphone (MIC) configured to receive an external audio signal when the device 600 is in an operation mode, such as a call mode, a recording mode, and a voice recognition mode. The received audio signal may be further stored in the memory 630. In some embodiments, the audio component 660 further includes a speaker to output audio signals.

The I/O interface 670 provides an interface for the processing component 640 and peripheral interface modules, such as a keyboard, a click wheel, buttons, and the like. The buttons may include, but are not limited to, a home button, a volume button, a starting button, and a locking button.

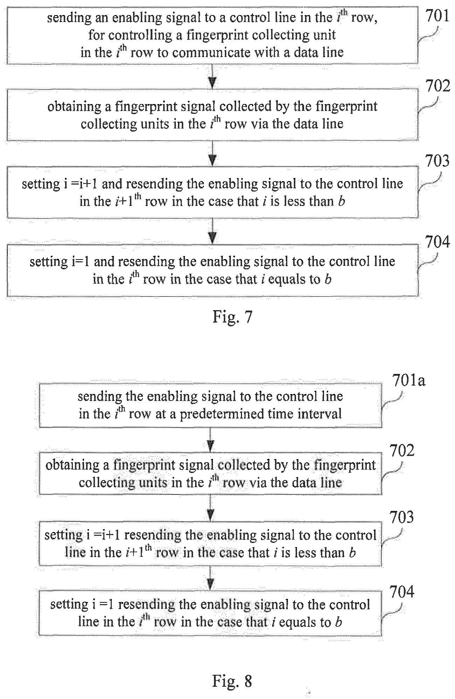

Fig. 7 is a flow chart showing a method for controlling identification according to an illustrative embodiment of the present disclosure. In the present embodiment, as shown in Fig. 6, the method for controlling the identification being used in the fingerprint collecting control unit inside a terminal is taken as an example. The method includes the following steps.

In step 701, an enabling signal is sent to the control line in the *i*^{th} row, for controlling the fingerprint collecting units in the *i*^{th} row to communicate with the data line.

The enable signal is configured to control the fingerprint collecting unit in the *i*^{th} row to communicate with the data line. The fingerprint collecting control unit sends the enabling signal to the control line in the *i*^{th} row of the control circuit. With the enabling signal, the fingerprint collecting units in the *i*^{th} row are communicated with the data line of the control circuit.

For example, as shown in Fig. 5, it is assumed that the control circuit includes four columns of the data lines 41, three rows of the control lines 42, and four fingerprint collecting units 33 in each row (i.e., 12 fingerprint collecting units 33 in total). When the fingerprint collecting control unit sends the enabling signal to the control line in the first row, four switches 45 in the first row are all in an ON state and four fingerprint collecting units 33 in the first row are communicated with the corresponded data line 41.

In step 702, a fingerprint signal collected by the fingerprint collecting units in the *i*^{th} row is obtained via the data line.

The fingerprint collecting control unit obtains the fingerprint signal collected by the fingerprint collecting units in the *i*^{th} row via the data line. After collected by the fingerprint collecting units, the fingerprint signal is transmitted to the fingerprint collecting control unit in the case of communicating with the data line.

For example, as shown in Fig. 5, it is assumed that the control circuit includes four columns of the data lines 41, three rows of the control lines 42, and four fingerprint collecting units 33 in each row (i.e., 12 fingerprint collecting units 33 in total). After four fingerprint collecting units 33 in the first row are communicated with the data line 41, the fingerprint collecting control unit may obtain the fingerprint signals collected by four fingerprint collecting units 33 via four columns of the data lines 41.

The fingerprint signal obtained by the fingerprint collecting control unit is an analog signal. The analog signal is converted to a digital signal by an analog-digital converter, and the digital signal is stored in a memory.

In step 703, in the case that *i* is less than *b,* setting *i*=*i*+1, the enabling signal is resent to the control line in the *i*^{th} row.

*i* represents the row number of the control line; and *b* represents the total number of rows. In the case that *i* is less than *b,* the fingerprint collecting control unit sends the enabling signal to the control line in the *i*+1^{th} row; and in the case that *i=b,* step 704 is performed.

For example, as shown in Fig. 4, it is assumed that the control circuit includes eight rows of the control lines. In the case that the fingerprint collecting control unit sends the enabling signal to the control line in the third row for a predetermined time period, i.e., *i*=3<8, the enabling signal is sent to the control line in the fourth row again until the enabling signal is sent to the control line in the eighth row. That is, the fingerprint collecting control unit sends the enabling signal to the control line row-by-row at intervals of the predetermined time period.

In step 704, in the case that *i* equals to *b,* the enabling signal is resent to the control line in the *i*^{th} row.

In the case that *i* equals to *b,* when i=1, the fingerprint collecting control unit sends the enabling signal to the control line in the first row. That is the enabling signal is sent to the control line again from the first row after the fingerprint collecting control unit has sent the enabling signal to all rows of the control lines.
Step 701 is performed again after completing step 704, i.e., steps 701 to 704 are performed circularly. In the case that *i* is of an initial value of 1, the enabling signal is sent to the control lines row-by-row from the first row till the last row, so as to collect the fingerprint signal corresponding to a current frame. Subsequently, it is repeated that the enabling signal is sent to the control lines row-by-row from the first row to the last row, so as to collect the fingerprint signal corresponding to a next frame.

Above all, with the method for controlling the identification provided by embodiments of the present disclosure, the fingerprint colleting control unit sends the enabling signal to the control lines in the control circuit row-by-row, so that the fingerprint colleting unit in the control circuit is communicated with the data line; obtains the finger signal via the control line in the ON state; and processes the fingerprint signal, so as to integrate the fingerprint identifying function into the OLED panel, such that a front panel of the terminal may have the displaying function and the fingerprint identifying function at the same time even if merely provided with the OLED panel, thereby enhancing integral consistency and aesthetics of the terminal.

Currently, the fingerprint is generally identified mainly by a capacitive, ultrasonic or optical way. In the case that the fingerprint is identified by the capacitive way, the fingerprint is obtained by collecting an image consisting of different values of capacitance resulting from different distances to a contact screen (an electrode) from convex and concave points of an uneven surface of a finger. As interference occurs with a capacitor for collecting the fingerprint when the OLED panel displays a content of the pixel sub-unit, in order to avoid the interference between signals when identifying the fingerprint in the capacitive way, it is required to collect the fingerprint signal at intervals between displaying the content.

In the case that the fingerprint is identified by the capacitive way, on the basis of an alternative embodiment as shown in Fig. 7, step 701 includes the following steps as shown in Fig. 8.

In step 701 a, the enabling signal is sent to the control line in the *i*^{th} row at a predetermined time interval.

Alternatively, the predetermined time interval includes any one of the three options that follow.

1. a time interval between a first time point when the OLED panel refreshes to display a displaying content of the *i*^{th} frame and a second time point when the OLED panel refreshes to display a displaying content of the *i*+1^{th} frame, in which *i* is a positive integer.

There exists a rest duration subsequent to refreshing to display the displaying content of the *i*^{th} frame and prior to refreshing to display the displaying content of the *i*+1^{th} frame by the OLED panel, i.e., a time interval. Therefore, the fingerprint collecting unit may collect the fingerprint signal at the time interval, so as to achieve the fingerprint identifying function of the panel.
2. a time interval between a third time point when the OLED panel refreshes to display a displaying content of the *i*^{th} row and a fourth time point when the OLED panel refreshes to display a displaying content of the *i*+1^{th} row, in which *i* is a positive integer.
   There exists a rest duration subsequent to refreshing to display the displaying content of the *i*^{th} frame and prior to refreshing to display the displaying content of the *i*+1^{th} frame by the OLED panel, i.e., a time interval. The fingerprint collecting unit may collect the fingerprint signal at the time interval.
3. a time interval between a fifth time point when the OLED panel refreshes to display a displaying content of the *i*^{th} group and a sixth time point when the OLED panel refreshes to display a displaying content of the *i*+1^{th} group, in which each group of the displaying content includes successive *L* rows of the displaying content, *i* is a positive integer, *L* is the total number of rows predetermined.

It is predetermined that *L* rows of the displaying content constituent one group, i.e., the displaying content in the *i*^{th} group includes successive *L* rows of the displaying content; and the displaying content in the *i*+1^{th} group also includes successive *L* rows of the displaying content. There exists a rest duration subsequent to refreshing to display the displaying content of the *i*^{th} group and prior to refreshing to display the displaying content of the *i*+1^{th} group by the OLED panel, i.e., a time interval. The fingerprint collecting unit may collect the fingerprint signal at the time interval.

Above all, with the method for controlling the identification provided by embodiments of the present disclosure, the enabling signal is sent to the control line at the predetermined time interval, so as to avoid interference from occurring with a capacitor for collecting the fingerprint when the OLED displays the content of the pixel sub-unit, thereby preventing the fingerprint collecting function and the display function from being interfered each other, and thus collecting the fingerprint signal accurately and achieving the fingerprint identifying function.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. An organic light emitting diode, OLED, display panel, comprising:
an array substrate;
an OLED layer disposed on the array substrate;
a fingerprint collecting unit array disposed in the array substrate or between the array substrate and the OLED layer; and
a control circuit connected to the fingerprint collecting unit array.

2. The OLED display panel according to claim 1, wherein
the array substrate comprises *m*×*n* pixel units, each pixel unit comprises K pixel sub-units; and
the fingerprint collecting unit array comprises *a*×*b* fingerprint collecting units, each fingerprint collecting unit corresponds to one pixel sub-unit in a one-to-one manner,
wherein *a*≤*K*×*m* and *b≤n.*

3. The OLED display panel according to claim 2, wherein
the fingerprint collecting units in the fingerprint collecting unit array correspond to the pixel sub-units in the array substrate in the one-to-one manner, wherein *a*=*K*×*m* and *b=n;* or
the fingerprint collecting unit array is disposed on a partial region of the array substrate, the fingerprint collecting units in the fingerprint collecting unit array correspond to the pixel sub-units of the partial region in the one-to-one manner, wherein *a<K*×*m* and *b*<*n*; or *a*< *K*×*m* and *b*=*n*; or *a*=*K*×*m* and *b*<*n.*

4. The OLED display panel according to claim 2 or 3, wherein
the fingerprint collecting unit array is disposed in the array substrate;
the pixel sub-unit comprises a thin film transistor, TFT, region and a non-TFT region; and
a position in which at least one fingerprint collecting unit is present is located at the non-TFT region of a corresponding pixel sub-unit.

5. The OLED display panel according to claim 2 or 3, wherein
the fingerprint collecting unit array is disposed between the array substrate and the OLED layer; and
a position in which the fingerprint collecting unit is present is located above a region of a corresponding sub-pixel unit.

6. The OLED display panel according to any of claim 2 to 5, wherein
the control circuit comprises a plurality of data lines in *a* columns and a plurality of control lines in *b* rows;
each row of the plurality of control lines is connected to the plurality of data lines in *a* columns via *a* switches; and
a control terminal of each switch is connected to a corresponding control line, a first connecting terminal of each switch is connected to a corresponding fingerprint collecting unit, and a second connecting terminal of each switch is connected to a corresponding data line.

7. A terminal, comprising an organic light emitting diode (OLED) display panel according to any of claims 1 to 6.

8. The terminal according to claim 7, wherein
the OLED display panel is the OLED display panel according to claim 6; and
the terminal further comprises a fingerprint collecting control unit connected to each data line and each control line.

9. A method for controlling identification, for use in a fingerprint collecting control unit connected to an organic light emitting diode (OLED) display panel according to claim 6, comprising:
sending an enabling signal to a control line in the *i*^{th} row, for controlling a fingerprint collecting unit in the *i*^{th} row to communicate with a data line;
obtaining a fingerprint signal collected by the fingerprint collecting units in the *i*^{th} row via the data line;
setting *i*=*i*+1 and resending the enabling signal to the control line in the *i*^{th} row in the case that *i* is less than *b;* and
setting *i*=1 and resending the enabling signal to the control line in the *i*^{th} row in the case that *i* equals to *b.*

10. The method according to claim 9, wherein sending the enabling signal to the control line in the *i*^{th} row comprises:
sending the enabling signal to the control line in the *i*^{th} row at a predetermined time interval,
wherein the predetermined time interval comprises:
a time interval between a first time point when the OLED display panel refreshes to display a displaying content of the *i*^{th} frame and a second time point when the OLED display panel refreshes to display a displaying content of the *i*+1^{th} frame, *i* being a positive integer; or
a time interval between a third time point when the OLED display panel refreshes to display a displaying content of the *i*^{th} row and a fourth time point when the OLED display panel refreshes to display a displaying content of the *i*+1^{th} row, *i* being a positive integer; or
a time interval between a fifth time point when the OLED display panel refreshes to display a displaying content of the *i*^{th} group and a sixth time point when the OLED display panel refreshes to display a displaying content of the *i*+1^{th} group, each group of the displaying content comprising successive *L* rows of the displaying content, *i* being a positive integer, *L* being the total number of rows predetermined.

11. A computer program product having stored instructions that, when executed by one or more processors of a terminal comprising an organic light emitting diode, OLED, display panel according to any of claims 1 to 6, causes the terminal to perform a method for controlling identification, for use in a fingerprint collecting control unit connected to the OLED panel, the method comprising:
sending an enabling signal to a control line in the *i*^{th} row, for controlling a fingerprint collecting unit in the *i*^{th} row to communicate with a data line;
obtaining a fingerprint signal collected by the fingerprint collecting units in the *i*^{th} row via the data line;
setting *i*=*i*+1 and resending the enabling signal to the control line in the *i*^{th} row in the case that *i* is less than *b*; and
setting *i*=1 and resending the enabling signal to the control line in the *i*^{th} row in the case that *i* equals to *b.*

12. The computer program product according to claim 11, wherein sending the enabling signal to the control line in the *i*^{th} row comprises:
sending the enabling signal to the control line in the *i*^{th} row at a predetermined time interval,
wherein the predetermined time interval comprises:
a time interval between a first time point when the OLED display panel refreshes to display a displaying content of the *i*^{th} frame and a second time point when the OLED display panel refreshes to display a displaying content of the *i*+1^{th} frame, *i* being a positive integer; or
a time interval between a third time point when the OLED display panel refreshes to display a displaying content of the *i*^{th} row and a fourth time point when the OLED display panel refreshes to display a displaying content of the *i*+1^{th} row, *i* being a positive integer; or
a time interval between a fifth time point when the OLED display panel refreshes to display a displaying content of the *i*^{th} group and a sixth time point when the OLED display panel refreshes to display a displaying content of the *i*+1^{th} group, each group of the displaying content comprising successive *L* rows of the displaying content, *i* being a positive integer, *L* being the total number of rows predetermined.
